# EUROPEAN PATENT APPLICATION

(11) **EP 1 327 877 A1**
(43) Date of publication of application: **16.07.2003**
(21) Application number: 02075149.1
(22) Date of filing: 15.01.2002
(51) Int. Cl.: G01N 23/20

(54) **Method for successively performing powder diffraction analysis on a plurality of samples**

(71) Applicant: Avantium International B.V., 1014 BV Amsterdam (NL)
(72) Inventor: van Langevelde, Adriaan Jan, 1325 NG Almere (NL); Blomsma, Erwin, 2011 EV Haarlem (NL)
(74) Representative: Wittop Koning, Tom Hugo

(57) **Abstract**

The present invention relates to a method for successively performing a powder diffraction analysis of at least two powder samples being contained in sample holding means for holding at least two powder samples, wherein the method comprises:
successively analyzing each of the at least two powder samples by irradiating the powder samples in the sample holding means with a suitable radiation beam generated by a source of radiation, and detecting the diffraction radiation of the powder samples, wherein each powder sample is subjected, during irradiation and detection, to a precession movement, a translation or a combination thereof.

## Description

The present invention relates to a method for performing a powder diffraction analysis of a powder sample, either using transmission or reflection mode.

Scattering of incident radiation such as X-rays, gamma rays, cathode rays, etc. from a sample of material can yield information about the atomic structure of the material. When such a beam of radiation strikes a sample, a pattern of diffracted radiation is created, which has a spatial intensity distribution that depends on the wavelength of the incident radiation and the atomic structure of the material and that can be recorded on a suitable detector such as a point detector, a 1D array detector or a 2D detector. Diffraction analysis is the method of choice for studying crystalline materials, crystallisation behaviour and liquid, gel or solid phase, or phase transitions of materials.

A problem that is encountered when using known devices and methods for performing a powder diffraction analysis is that it is time consuming when a plurality of powder samples have to be analysed. This problem is particularly pertinent in case of high throughput experimentation. According to the known method each powder sample is prepared one by one and placed in the apparatus for performing the powder diffraction analysis. Then the apparatus is set and fine tuned, whereupon irradiation and detection take places. Subsequently, the powder is removed and a further powder sample is prepared and so on. This results in an ineffective way of working and thus in a considerable loss of time.

A further problem that is encountered with known powder diffraction analysis is that during detection of the diffraction radiation using a 2D detector, single diffraction spots and arcs are often observed instead of rings, especially when organic crystalline material (such as pharmaceuticals) is irradiated. This may be the result of the fact that not all lattice planes of the crystalline powder material have been in reflection or not for the same time or same amount, because the crystals were not random oriented or only a few crystals were present. As a result, the peak intensities of the powder diffraction patterns are not correct, and no representative 1D powder diffraction pattern (intensity vs. diffraction angle 2θ) is created after integration of the detected 2D diffraction patterns causing problems during comparison of diffraction patterns for identification.

Therefore it is an object of the present invention to solve one or more of the above problems and to provide a method for performing a powder diffraction analysis in which a plurality of powder samples may be analysed in a time effective way.

It is a further object of the present invention to allow a diffraction pattern to be obtained with correct reflection intensities.

It is an even further object of the present invention to provide an alternative method for performing a powder diffraction analysis.

The above and other objects can be achieved by a method according to the present invention for successively performing a powder diffraction analysis of at least two powder samples being contained in sample holding means for holding at least two powder samples, wherein the method comprises:
successively analyzing each of the at least two powder samples by irradiating the powder samples in the sample holding means with a suitable radiation beam generated by a source of radiation, and detecting the diffraction radiation of the powder samples, wherein each powder sample is subjected, during irradiation and detection, to a precession movement, a translation or a combination thereof.

It has been surprisingly found that using the method according to the present invention a plurality of powder samples may be analysed in a time effective way. The powder samples may be all prepared at the same time, and can be placed at the same time in an apparatus for performing a powder sample diffraction analysis. Then, the powder samples are all analysed one by one, without the need to remove an earlier powder sample and resetting and fine tuning the apparatus.

A "powder sample" is defined herein as a powder sample of a compound of which the diffraction or crystallisation behaviour is to be determined. Such a compound may be a chemical substance, or a mixture of different substances. Also, at least one crystal form of the compound may be known or expected to exist. A compound of the invention may comprise an organic or organo-metallic molecular compound, such as a pharmaceutically active molecule or catalyst-ligand complex or a dimer, salt, ester, solvate or functional part thereof. A powder sample of the present invention may also comprise a biomolecule, for instance a nucleic acid (such as DNA, RNA and PNA), a polypeptide, peptides, glycoprotein and other proteinaceous substances, a lipoprotein, protein-nucleic acid complex, carbohydrate, biomimetic or a functional part, derivative and/or analogue thereof.

It is to be noted that the powder sample may indeed be in the form of a powder. The person skilled in the art of diffraction analysis understands, however, that a "powder sample" also includes a number of crystals which are contained in a solid material, such as is the case for metals, polymers, etc. Thus, in the latter case, the powder sample appears as a solid material in one piece.

According to the present invention "powder diffraction analysis" comprises both transmission and reflection diffraction analysis. Transmission and reflection diffraction analysis are well known in the art an do not require further explanation.

According to the present invention, with "sample holding means" is meant any means capable of holding at least two powder samples, both in form of a powder and in form of a solid material in one piece, such that the samples can be subjected to a transmission or reflection powder diffraction analysis.

The powder sample may be provided in a specially designed substrate similar to a microtiter plate as a support, fabricated from material that is translucent to e.g. X-rays. Said substrate is preferably chemically inert to the substances and solvents employed and is preferably transparent to the detection technique used, e.g. X-ray transparent in case of X-ray diffraction technique. The substrate is preferably also transparent to visual light (ca 200 nm to 1000 nm) to allow visual or optical inspection. The substrate is preferably also capable of transferring heat, thereby allowing for temperature variations. Examples of arrays are 8 by 12 mm up to 32 by 48 mm, with orthogonal centre to centre distance varying from 2 to 10 mm between the containers or wells of the substrate. Of course, the substrate may be provided with means for controlling and/or adjusting the atmosphere conditions in or directly above the cells. For this purpose the support medium is for instance fitted with sealing devices or sealing substances which seal off individual cells or groups of cells. Balls, plates, caps, inert liquids like paraffin oil, silicon oil, etc. can be provided for said sealing purposes. In this respect it is noted that the sealing devices and/or sealing substances do not necessarily (and preferably do not) attach the powder sample to the support, but are provided for controlling the atmosphere in or directly above an individual cell or a group of cells.

According to the present invention, with "suitable radiation" any radiation is meant which can be used for performing a transmission or reflection diffraction analysis (preferably transmission diffraction analysis) of the powder samples, such as X-rays, gamma rays, cathode rays. Preferably as the radiation X-rays are used.

According to a first preferred embodiment of the method, the powder sample is subjected to a precession movement. Herewith, account can be taken of different orientations of the crystals.

"Precession movement" is a technique that is well known in the art for single crystal measurement techniques. Detailed explanation of an exemplary precession movement technique may for example be found in 'Fundamentals of Crystallography', edited by C. Giacovazzo, pp. 254-259 (1991) or in various internet-sites of Astrophysics sciences, the latter explaining the precession movement of the equinox.

In this respect it is noted that, although it is known since the early 1940's to use precession movements for single crystal measurements, this technique has not been used for powder sample measurements. Further, in single crystal measurements, precession movement is used to obtain single crystal unit cell parameters and not for performing a powder diffraction analysis which is completely different.

According to the present invention with "precession movement" is meant any movement relative to the radiation beam which allows a certain area of the powder sample, containing one or more crystals, to be irradiated and detected such that account can be taken of different orientations of the crystals in the same certain area. Of course, the size of the area of the powder sample and the number of crystals contained in this area being irradiated and detected depend on the diameter of the incident radiation beam and the size of the crystals. As an example, if the diameter of the X-ray beam ranges from 0.1 to 1 mm, this results in an irradiated area at a flat sample of 0.00785 to 0.785 mm². Having a sample plate with 4 mm diameter wells and an area for irradiation of 12.566 mm²/well this results in a range of 0.06% to 6.2% of irradiated area.

The movement relative to the radiation beam may be such that the incident radiation beam is 'centred' in the area to be analysed, while the angle of the incident radiation beam is altered i.e. resulting in a tilting movement. Instead, the movement may be such that the radiation beam, again being centred in the area to be analysed, follows a cone-like path or rotation. Preferably the precession movement is a combination of an alteration of the incident angle and a (cone-like) rotation, as this allows different crystal orientations in the area to be analysed at the same time.

The precession movement according to the present invention includes the precession movement as described in 'Fundamentals of Crystallography' (see above), but is not limited thereto.

According to a second preferred embodiment of method, the powder sample is subjected to a translation, i.e. the radiation beam is displaced, parallel to the former position of the radiation beam allowing other crystals in the powder sample to be analysed.

Herewith powder diffraction rings may be obtained instead of single diffraction spots, as the particle statistics is significantly improved. Particle statistics is a term known in the art. With achieving 'improved particle statistics' is meant obtaining a powder diffraction pattern with more reliable reflection intensities, or intensities with reduced standard deviation.

In this respect it is mentioned that it is known to improve the so called particle statistics by spinning a powder sample around the axis perpendicular to the sample surface. This is generally applied in both reflection and transmission powder diffraction measurements. However, if sample spinning would be used in combination with sample holding means for holding at least two powder samples this would result in that the powder samples might be displaced by the rotation of the whole sample holding means, as the spinning is usually performed at high speed. It goes without saying that this rotation of the whole sample holding means is not desirable.

According to a particularly preferred embodiment, the powder sample is subjected to a combination of a precession movement and a translation.

Herewith at the same time improved particle statistics can be obtained and account can be taken of different orientations of the crystals in a surprisingly simple manner.

In a further aspect the present invention relates to an apparatus for performing a powder diffraction analysis of a powder sample, wherein the apparatus comprises:
- a source of radiation being adapted to direct a radiation beam to the powder sample;
- a sample holding means for holding at least two powder samples;
- a detector for detection of the diffraction radiation of the powder sample;
- means designed for subjecting the powder sample to a precession movement, a translation or a combination thereof, during irradiation and detection.

Preferably the means are designed for subjecting the powder sample to a precession movement, a translation or a combination of a precession movement and translation.

Hereinafter the present invention will be illustrated in more detail by a drawing. Herein shows:
Figure 1 a schematic diagram of a transmission mode X-ray diffraction analysing apparatus to be used in accordance with the method of the present invention;
Figure 2 shows a schematic diagram of an exemplary path that the radiation beam may follow over one powder sample during irradiation and detection, using a translation movement;
Figure 3 shows a result of a known powder diffraction measurement, wherein single diffraction spots are obtained; and
Figure 4 shows a result of a powder diffraction measurement obtained using the method according to the present invention, using a translation, wherein powder diffraction rings are obtained.

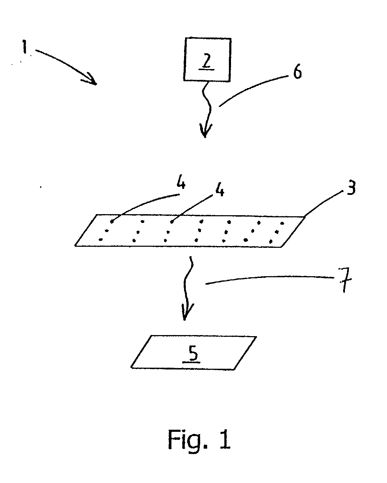

Figure 1 shows a diagram of an exemplary transmission mode X-ray diffraction analysing apparatus 1 to be used in accordance with the present invention. The apparatus 1 comprises a source 2 of intense X-ray radiation 6 such as a conventional X-ray tube, an array 3 such as a translucent microtiter plate for supporting a plurality of powder samples 4, and a detector 5 for detection of the diffraction radiation 7 passed through the powder sample 4. In the shown embodiment the source 2 of X-ray radiation 6 is located above the powder sample 4. The detector 5 for the diffraction radiation 7 is in the shown embodiment located on the opposite end of the powder sample 4 from the source of radiation 2, such that the radiation 7 is detected and recorded after passing through the powder sample 4. The detector 5 may be any suitable detector, such as a stimulable phosphor image plate detector. Preferably the detector 5 is a position sensitive 2D radiation detector. Further, means (not shown), usually motorized, are present to allow the powder sample to be subjected to a precession movement or translation, or a combination thereof. Means for obtaining a precession movement or a translation are known in the field.

In use, a beam of X-rays 6 is generated by the radiation source 2, and directed to one of the powder samples 4 positioned in the array 3. The beam of X-rays 6 strikes the powder sample 4 positioned on the array 3 while the powder sample 4 is subjected to a movement relative to the radiation beam 6, and the diffracted radiation 7 scatters from the powder sample 4 in a pattern which is recorded in the detector 5. Subsequently, a further powder sample 4 on the array 3 is analyzed.

In case of a precession movement, the normal to the sample plane of a powder sample 4 precesses about the radiation beam 6. In the shown embodiment of transmission diffraction, this means that the normal to the sample plane of the powder sample 4 revolves about the radiation beam 6, while keeping e.g. a constant angle, the "precession angle". The normal to the sample plane may thus be subjected to a cone-shaped motion relative to the radiation beam 6. The movement is not restricted to a constant precession angle. Also, the precession movement may result in a tilting movement.

In case of a translation, the radiation beam 6 (or the array 3) is moved such that the radiation beam 6 obtains a position parallel to the former position.

A combination of the above precession movement and translation allows the normal to the sample plane to rotate about all possible axes in the plane of the sample, or all possible rotations about the center of the sample surface except for in-plane rotation.

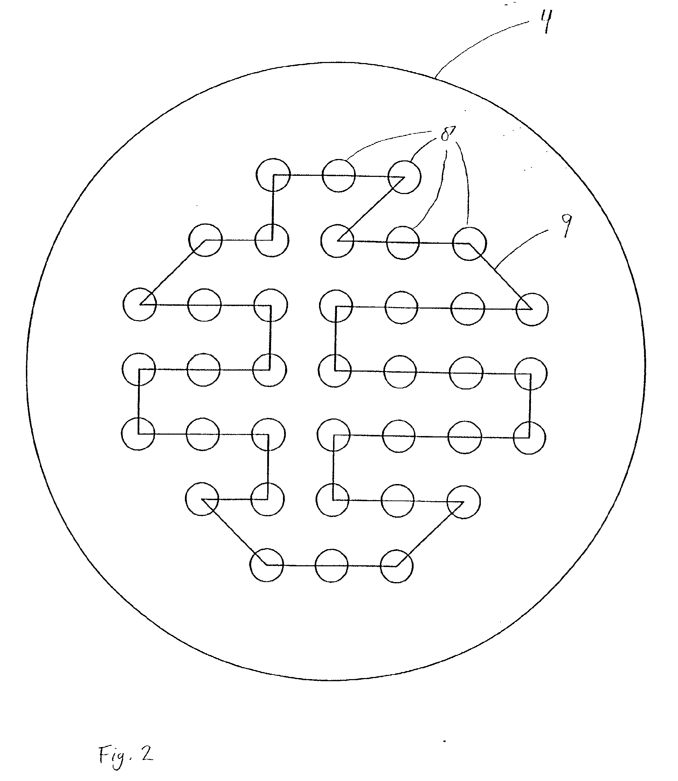

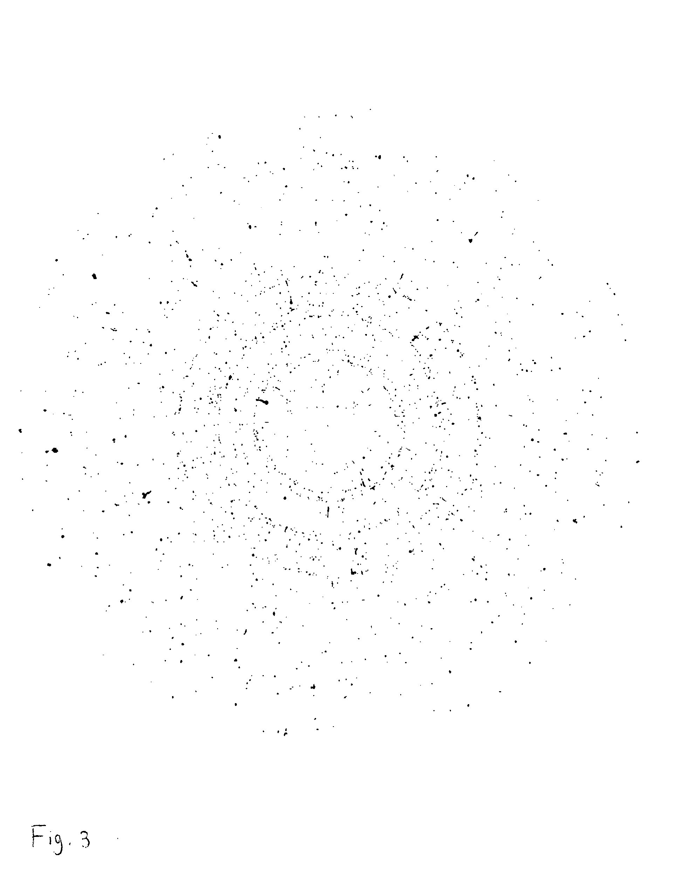

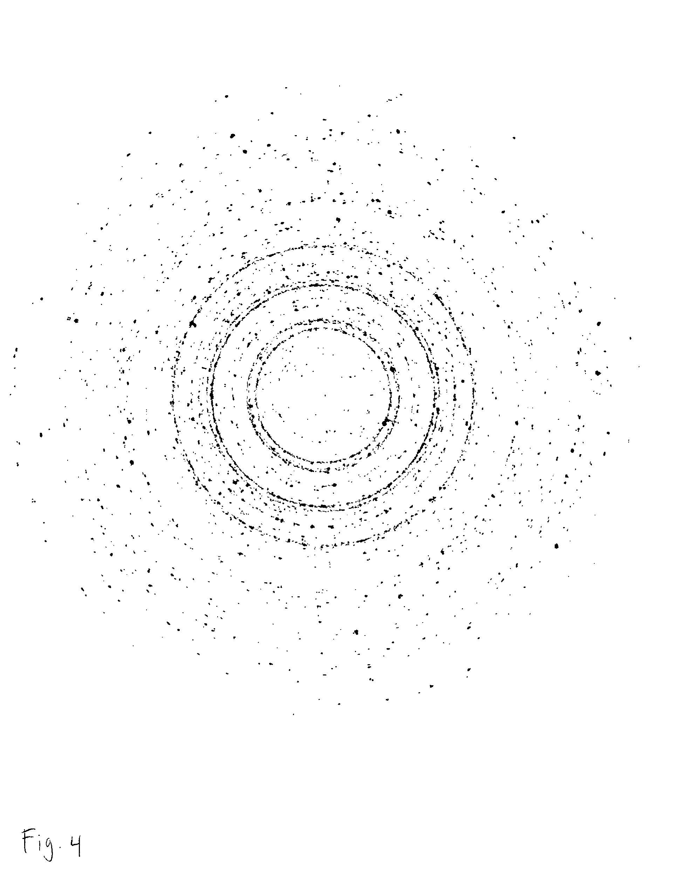

Figure 2 shows a schematic diagram of an exemplary path that the radiation beam 6 of Fig. 1 may follow during irradiation of one of the powder samples 4 on the array 3 in Fig. 1 using translation. The path of the diffraction radiation obtained by the translation is denoted with 9. Herewith several parts 8 of the powder sample 4 are irradiated, whereby diffraction rings (see Fig. 4) instead of diffraction arcs or spots (see Fig. 3) may be obtained.

Figure 3 shows a two-dimensional X-ray diffraction image of manually crunched sugar using a 0.4 mm X-ray beam fixed at the center of the sample according to the state of the art.

Figure 4 shows a two-dimensional X-ray diffraction image of the same crunched sugar as in Figure 3 using a 0.4 mm X-ray beam while the radiation beam is subjected to a translation according to the present invention.

## Claims

1. Method for successively performing a powder diffraction analysis of at least two powder samples being contained in sample holding means for holding at least two powder samples, wherein the method comprises:
successively analyzing at least two powder samples by irradiating the powder samples in the sample holding means with a suitable radiation beam generated by a source of radiation, and detecting the diffraction radiation of the powder samples, wherein each powder sample is subjected, during irradiation and detection, to a precession movement, a translation or a combination thereof.

2. Method according to claim 1, wherein the powder sample is subjected to a precession movement.

3. Method according to claim 1 or 2, wherein the powder sample is subjected to a combination of a precession movement and a translation.

4. Method according to any of the preceding claims, wherein the source of radiation is an X-ray source.

5. Method according to any of the preceding claims, wherein the diffraction analysis is a transmission diffraction analysis.

6. Apparatus (1) for performing a powder diffraction analysis of a powder sample (4), wherein the apparatus (1) comprises:
- a source of radiation (2) being adapted to direct a radiation beam (6) to the powder sample (4);
- a sample holding means (3) for holding at least two powder samples (4);
- a detector (5) for detection of the diffraction radiation (7) of the powder sample (4);
- means designed for subjecting the powder sample (4) to a precession movement, a translation, or a combination thereof, during irradiation and detection.

7. Apparatus according to claim 6, wherein the means are designed for subjecting the powder sample (4) to a precession movement, or a combination of a precession movement and translation.
